# EUROPEAN PATENT APPLICATION

(11) **EP 4 261 595 A1**
(43) Date of publication of application: **18.10.2023**
(21) Application number: 21908981.0
(22) Date of filing: 22.11.2021
(51) Int. Cl.: G02B 27/01, G02C 11/00

(54) **EYEGLASSES FRAME AND SMART EYEGLASSES**

(30) Priority: 25.12.2020 CN 202023205668 U; 25.04.2021 CN 202110451063
(71) Applicant: GUANGDONG OPPO MOBILE TELECOMMUNICATIONS CORP., LTD., Dongguan, Guangdong 523860 (CN)
(72) Inventor: FAN, Xiaoyu, Dongguan, Guangdong 523860 (CN); LV, Chengkan, Dongguan, Guangdong 523860 (CN)
(74) Representative: Grassi, Stefano
(86) International application number: PCT/CN2021/132106
(87) International publication number: WO 2022/134982

(57) **Abstract**

Smart eyeglasses (100), comprising an eyeglasses frame (20), at least one host device (40), and connectors (60), wherein the eyeglasses frame (20) is an empty eyeglasses frame or an eyeglasses frame worn by a user; the host device (40) comprising a host (42) and a display device (45) connected to the host (42); and by means of the connectors (60), the at least one host device (40) is detachably connected to the empty eyeglasses frame or the eyeglasses frame worn by the user. Users may freely combine the host device (40) and the eyeglasses frame (20) according to their own needs, and the smart eyeglasses has strong versatility, which greatly improves the degree of freedom of installing and using the host device (40) and taking off the host device (40). The smart eyeglasses is simple to operate and easy to use. Also provided is the eyeglasses frame (20).

## Description

This application claims priority of the utility model patent application with the application number of 202023205668.X, application data of December 25, 2020 and title of "SMART EYEGLASSES AND CHARGING DEVICE THEREOF", and claims priority of the invention patent application with the application number of 202110451063.9, the application date of April 25, 2021 and the title of "EYEGLASSES FRAME AND SMART EYEGLASSES".

### TECHNICAL FIELD

The present disclosure relates to the field of smart wearing, and in particular to an eyeglasses frame and smart eyeglasses provided with the eyeglasses frame.

### BACKGROUND

Augmented reality (AR) smart eyeglasses generally include an eyeglasses frame, a display device fixedly connected to the eyeglasses frame, and a host. Hardware such as a battery, a processing chip and the like are disposed in the host, and the display device includes a display screen, a camera and the like. One kind of the AR smart eyeglasses separates the host from the eyeglasses frame and connects them through a data line, and this kind of the AR smart eyeglasses has strong computing power and good AR effect. Another kind of the AR smart eyeglasses fixedly connects the display device and the host to the eyeglasses frame, which is convenient to carry.

However, AR eyeglasses are unfriendly and inconvenient for users with myopia, hyperopia or astigmatism.

### SUMMARY

The purpose of the present disclosure is to provide smart eyeglasses which can adapt to users with different eyesight and an eyeglasses frame of the smart eyeglasses.

In order to solve the above technical problems, the present disclosure provides smart eyeglasses for a user to wear, the smart eyeglasses include an eyeglasses frame, at least one host device and a connecting piece, the eyeglasses frame is an empty eyeglasses frame or an eyeglasses frame worn by the user, the host device includes a host and a display device connected to the host, the at least one host device is detachably connected to the empty eyeglasses frame or the eyeglasses frame worn by the user through the connecting piece.

The present disclosure provides an eyeglasses frame for supporting host devices, the eyeglasses frame includes a frame body and connecting pieces, the frame body includes two eyeglass feet, each of the two eyeglass feet is provided with at least one of the connecting pieces, and each of the connecting pieces is detachably connected to a corresponding one of the host devices.

The present disclosure provides smart eyeglasses, the smart eyeglasses include an eyeglasses frame and at least one host device, the eyeglasses frame includes a frame body and at least one connecting piece, the frame body includes two eyeglass feet, at least one eyeglass foot is provided with the connecting piece, and the host device is detachably connected to the connecting piece.

### BRIEF DESCRIPTION OF THE DRAWINGS

In order to more clearly explain technical schemes of embodiments of the present disclosure, the drawings needed to be used in the description of the embodiments will be briefly introduced below. Apparently, the drawings in the following description are only some of the embodiments of the present disclosure, and other obvious deformation methods can be obtained according to these drawings without creative work for those skilled in the art.
FIG. 1 illustrates a schematic structural diagram of a three-dimensional structure of smart eyeglasses according to a first embodiment of the present disclosure.
FIG. 2 illustrates an exploded view of the three-dimensional structure of the smart eyeglasses illustrated in FIG. 1.
FIG. 3 illustrates an enlarged view of a host device and a connecting piece illustrated in FIG. 2.
FIG. 4 illustrates a schematic structural diagram of the host device and the connecting piece illustrated in FIG. 3 from another perspective.
FIG. 5 illustrates a schematic structural diagram of another connecting mode between a host device and a connecting piece according to an embodiment of the present disclosure.
FIG. 6 illustrates a schematic structural diagram of still another connecting mode between a host device and a connecting piece according to an embodiment of the present disclosure.
FIG. 7 illustrates a partial assembly view of the smart eyeglasses illustrated in FIG. 2.
FIG. 8 illustrates an exploded view of a three-dimensional structure of smart eyeglasses according to a second embodiment of the present disclosure.
FIG. 9 illustrates a schematic diagram of a three-dimensional structure of a host device illustrated in FIG. 8 from another perspective.
FIG. 10 illustrates a schematic diagram of a three-dimensional structure of smart eyeglasses according to a third embodiment of the present disclosure.
FIG. 11 illustrates an exploded view of the three-dimensional structure of the smart eyeglasses illustrated in FIG. 10.
FIG. 12 illustrates an exploded view of the three-dimensional structure of the smart eyeglasses illustrated in FIG. 11 from another perspective.
FIG. 13 illustrates a schematic assembly view of the smart eyeglasses illustrated in FIG. 12.
FIG. 14 illustrates a schematic view of a using state of the smart eyeglasses according to the third embodiment of the present disclosure.
FIG. 15 illustrates an exploded view of the smart eyeglasses illustrated in FIG. 14 from another perspective.
FIG. 16 illustrates a schematic diagram of the three-dimensional structure of the smart eyeglasses illustrated in FIG. 15.
FIG. 17 illustrates a schematic diagram of a three-dimensional structure of smart eyeglasses according to a fourth embodiment of the present disclosure.
FIG. 18 illustrates a schematic diagram of three-dimensional structures of a part of a host device and a connecting piece of smart eyeglasses according to a fifth embodiment of the present disclosure.
FIG. 19 illustrates a sectional view of the host device assembled with the connecting piece in FIG. 18.
FIG. 20 illustrates a schematic diagram of three-dimensional structures of a part of a host device and a connecting piece of smart eyeglasses according to a sixth embodiment of the present disclosure.
FIG. 21 illustrates a schematic diagram of three-dimensional structures of a part of a host device and a connecting piece of smart eyeglasses according to a seventh embodiment of the present disclosure.
FIG. 22 illustrates a schematic diagram of three-dimensional structures of a part of a host device and a connecting piece of smart eyeglasses according to an eighth embodiment of the present disclosure.
FIG. 23 illustrates a schematic diagram of three-dimensional structures of a part of a host device and a connecting piece of smart eyeglasses according to a ninth embodiment of the present disclosure.
FIG. 24 illustrates a sectional view of the host device assembled with the connecting piece in FIG. 23.
FIG. 25 illustrates a schematic diagram of three-dimensional structures of a part of a host device and a connecting piece of smart eyeglasses according to a tenth embodiment of the present disclosure.
FIG. 26 illustrates a sectional view of the host device assembled with the connecting piece in FIG. 25.

### DETAILED DESCRIPTION OF EMBODIMENTS

Smart eyeglasses for a user to wear are provided, the smart eyeglasses include: an eyeglasses frame, at least one host device and a connecting piece, the eyeglasses frame is an empty eyeglasses frame or an eyeglasses frame worn by the user, the host device includes a host and a display device connected to the host, the at least one host device is detachably connected to the empty eyeglasses frame or the eyeglasses frame worn by the user through the connecting piece.

The empty eyeglasses frame or the eyeglasses frame worn by the user include: an eyeglass foot, the connecting piece is connected between the eyeglass foot and the host.

The connecting piece is snapped on the eyeglass foot, and the connecting piece is connected with the host through magnetic attraction.

The connecting piece is provided with a first magnetic attraction element, and the host device is provided with a second magnetic attraction element, and the first magnetic attraction element and the second magnetic attraction element are magnetically attracted to each other.

The connecting piece and the host are integrated into a whole, and the connecting piece is detachably connected with the eyeglass foot.

The connecting piece is provided with a snapping groove, and the eyeglass foot is detachably snapped into the snapping groove.

The connecting piece is connected to the host in a snapping manner.

The connecting piece and the host are detachably connected through a cooperation of a slide rail and a slide groove.

An eyeglasses frame for supporting host devices is provided, the eyeglasses frame includes a frame body and connecting pieces, the frame body includes two eyeglass feet, each eyeglass foot is provided with at least one connecting piece, and each connecting piece is detachably connected to the host device.

The eyeglasses frame includes a conducting wire disposed in the frame body; each connecting piece is provided with a first electronic contact, two opposite ends of the conducting wire are respectively electrically connected with the first electronic contacts of the connecting pieces on the two eyeglass feet, the host device is provided with a second electronic contact corresponding to the first electronic contact, and when the host device is connected with the connecting piece, the first electronic contact is electrically connected with the second electronic contact.

The connecting piece is provided with a first magnetic attraction element, and the host device is provided with a second magnetic attraction element corresponding to the first magnetic attraction element; and a mutual magnetic attraction between the first magnetic attraction element and the second magnetic attraction element enables the connecting piece to be detachably connected to the host device.

The host device is defined with a positioning hole, and the connecting piece is detachably snapped into the positioning hole; the first electronic contact is disposed on an outer surface of the connecting piece, and the second electronic contact is disposed on an inner surface of the positioning hole.

The host device is provided with at least one positioning part on the inner surface of the positioning hole, and the outer surface of the connecting piece is provided with a positioning groove corresponding to at least one positioning part; or, the host device is provided with at least one positioning groove on the inner surface of the positioning hole, and the outer surface of the connecting piece is provided with a positioning part corresponding to the at least one positioning groove; and when the host device is connected to the connecting piece, the positioning part is snapped into the positioning groove.

The outer side of the connecting piece is provided with a first magnetic attraction element, and the inner surface of the positioning hole is provided with a second magnetic attraction element; after the connecting piece is snapped into the positioning hole, the first magnetic attraction element and the second magnetic attraction element are magnetically attracted to each other.

The connecting piece is provided with a snapping block, and the host device is provided with a snapping hole corresponding to the snapping block; the first electronic contact is disposed on the snapping block, the second electronic contact is disposed on the inner surface of the snapping hole, the snapping block is snapped into the snapping hole to connect the host device to the connecting piece, and the first electronic contact is electrically connected to the second electronic contact.

The connecting piece is provided with a snapping hole, and the host device is provided with a snapping block corresponding to the snapping hole; the first electronic contact is disposed on the inner surface of the snapping hole, the second electronic contact is disposed on the snapping block, the snapping block is snapped into the snapping hole to connect the host device to the connecting piece, and the first electronic contact is electrically connected to the second electronic contact.

The connecting piece is provided with a first magnetic attraction element, and the host device is provided with a second magnetic attraction element corresponding to the first magnetic attraction element; after the snapping block is snapped into the snapping hole, the first magnetic attraction element and the second magnetic attraction element are magnetically attracted to each other.

The connecting piece and the host device are connected through a cooperation of a slide rail and a guide slide rail; one of the slide rail and the guide slide rail is disposed on the connecting piece, and the other of the slide rail and the guide slide rail is disposed on the host device; after the slide rail and the guide slide rail are connected in place, the first electronic contact is electrically connected to the second electronic contact.

The eyeglasses frame includes a chip, electrically connected with the conducting wire, and having an encryption function.

The chip is configured to match communication and power supply between the host devices on the two eyeglass feet.

Smart eyeglasses are provided, the smart eyeglasses include: the eyeglasses frame and at least one host device; the eyeglasses frame includes a frame body and at least one connecting piece, the frame body includes two eyeglass feet, and at least one eyeglass foot is provided with the connecting piece; and the host device is detachably connected to the connecting piece.

The host device includes an augmented reality (AR) eyeglasses host, a virtual reality (VR) eyeglasses host, headphones, a flashlight, a speaker, or a camera.

In the following, the technical scheme in the embodiments of the present disclosure will be clearly and completely described with reference to the drawings in the embodiments of the present disclosure. Apparently, the described embodiments are only some of the embodiments of the present disclosure, but not all of the embodiments. Based on the embodiments in the present disclosure, all other embodiments obtained by those skilled in the art without creative labor belong to the scope of protection of the present disclosure.

In addition, the following descriptions of various embodiments refer to the attached drawings to illustrate specific embodiments that can be practiced in the present disclosure. Directional terms mentioned in the present disclosure, such as "up", "down", "front", "back", "left", "right", "inside", "outside" and "side", are only referring to the directions of the attached drawings, therefore, the directional terms used are for a better and clearer explanation and understanding of the present disclosure, rather than indicating or implying that the device or component referred to must have a specific orientation, be constructed and operated in a specific orientation, and therefore cannot be understood as a limitation on the present disclosure.

In the description of the present disclosure, it should be noted that unless otherwise specified and limited, the terms "installation", "connection", and "disposed on..." should be broadly understood, for example, they can be fixed connections, detachable connections, or integrated connections; they can be mechanical connections; they can be directly connected, or indirectly connected through an intermediate medium, or they can be the internal connection between two components. For those skilled in the art, the specific meanings of the above terms in the present disclosure can be understood in specific circumstances.

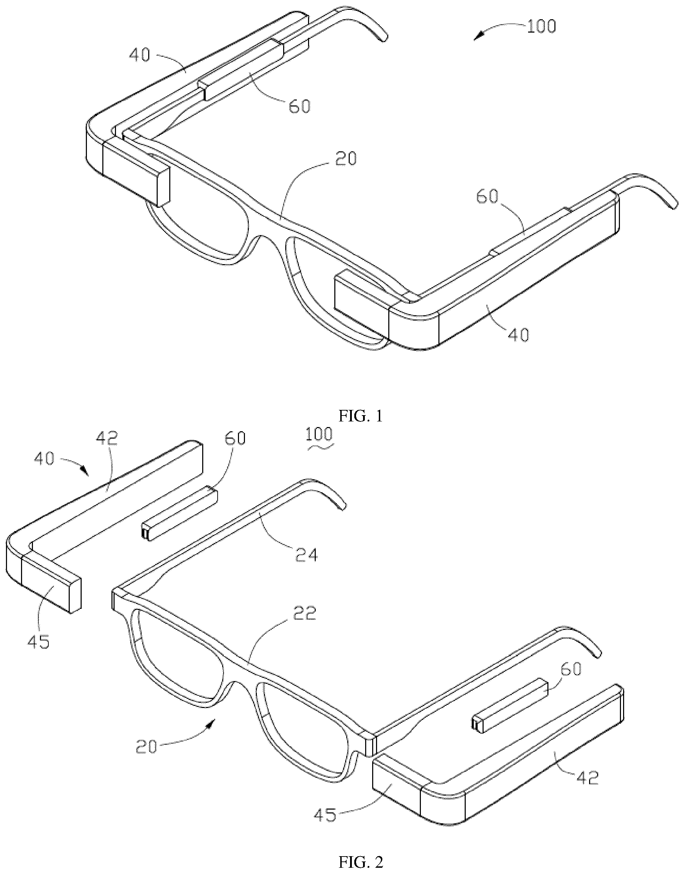

As illustrated in FIG. 1 and FIG. 2 together. FIG. 1 illustrates a schematic diagram of a three-dimensional structure of smart eyeglasses 100 according to a first embodiment of the present disclosure. FIG. 2 illustrates an exploded view of the three-dimensional structure of the smart eyeglasses 100 in FIG. 1. The smart eyeglasses 100 according to the first embodiment of the present disclosure are used to be worn by users. The smart eyeglasses 100 include an eyeglasses frame 20, at least one host device 40 and at least one connecting piece 60, and the eyeglasses frame 20 is an empty eyeglasses frame or an eyeglasses frame worn by the user. The host device 40 includes a host 42 and a display device 45 connected to the host 42. The host device 40 is detachably connected to the empty eyeglasses frame or the eyeglasses frame worn by the user through the connecting piece 60, thus the display device 45 is disposed at a front side of a lens frame of the empty eyeglasses frame or the eyeglasses frame worn by the user. The empty eyeglasses frame is suitable for users with normal eyesight who do not need to wear eyeglasses, and the eyeglasses frame worn by the users themselves is the eyeglasses frame of ordinary eyeglasses such as myopia eyeglasses, hyperopia eyeglasses or presbyopia eyeglasses that the users usually wear.

When the smart eyeglasses 100 of the present disclosure need to be used, if the user's eyesight is normal and he is not wearing eyeglasses, after an appropriate empty eyeglasses frame is selected, the user connects the host device 40 to the empty eyeglasses frame through the connecting piece 60, thus the display device 45 faces towards the lens frame of the empty eyeglasses frame, and then the host device 40 is turned on for normal use. If the user has already worn ordinary eyeglasses, the host device 40 is connected to the eyeglasses frame of the ordinary eyeglasses worn by the user through the connecting piece 60, thus the display device 45 faces towards the lens of the ordinary eyeglasses worn by the user, and then the host device 40 is turned on for normal use.

In this embodiment, the smart eyeglasses 100 may be, but are not limited to, AR eyeglasses, VR eyeglasses and the like.

The smart eyeglasses 100 of the present disclosure include the host device 40 and the connecting piece 60, and the host device 40 is detachably connected to the empty eyeglasses frame or the eyeglasses frame worn by the user himself through the connecting piece 60. Specifically, the host device 40 and the eyeglasses frame of the smart eyeglasses 100 in the present disclosure are set as two independent parts, and the user can freely combine the host device 40 and the eyeglasses frame according to his own needs. If the user does not wear eyeglasses, the user can connect the host device 40 to the empty eyeglasses frame through the connecting piece 60 and turn on the host device 40 to normally use the smart eyeglasses 100. If the user wears ordinary eyeglasses, the user can connect the host device 40 to the eyeglasses frame of the ordinary eyeglasses worn by the user through the connecting piece 60 and turn on the host device 40 to normally use the smart eyeglasses 100. Therefore, the smart eyeglasses 100 are not only suitable for users suffering from myopia, hyperopia or astigmatism, but also suitable for users who wear ordinary eyeglasses, that is, the smart eyeglasses 100 can adapt to users with different eyesight, which greatly improves the freedom of installing and using the host device 40 and removing the host device. Moreover, the host device 40 is detachably mounted on the eyeglasses frame. The host device 40 is small and compact, which is not only beautiful and light, but also conducive to the popularization of the smart eyeglasses 100 to a large number of people, let more ordinary consumers experience the convenience brought by AR technology. In addition, when the smart eyeglasses 100 are not used, the host device 40 can be separated from the empty eyeglasses frame or the eyeglasses frame worn by the user, thus the smart eyeglasses 100 can be conveniently stored and carried around, and the use of ordinary eyeglasses of the user is not affected, and the use is convenient.

As illustrated in FIG. 2, the eyeglasses frame 20 includes a lens frame 22 and eyeglass feet 24 connected to opposite ends of the lens frame 22, that is, the eyeglasses frame of the empty eyeglasses frame or the eyeglasses frame worn by the user itself includes the lens frame 22 and the eyeglass feet 24, and the lens frame 22 of the empty eyeglasses frame is not provided with lenses, and the eyeglasses frame worn by the user itself is provided with lenses suitable for the user. In this embodiment, the smart eyeglasses 100 include two host devices 40 and two connecting pieces 60, the two host devices 40 are detachably connected to the two eyeglass feet 24 through the corresponding connecting pieces 60, and the display device 45 of each host device 40 is facing the corresponding lens frame. That is, each connecting piece 60 is connected between one eyeglass foot 24 and the corresponding host 42.

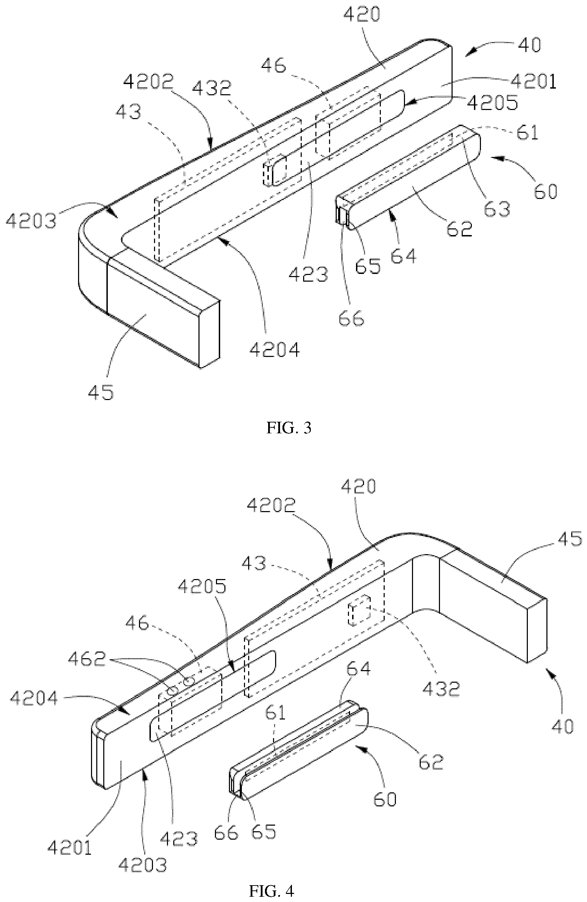

As illustrated in FIG. 3 and FIG. 4 together. FIG. 3 illustrates an enlarged view of one of the host devices 40 and one of the connecting pieces 60 in FIG. 2. FIG. 4 is a schematic view of three-dimensional structures of the host device 40 and the connecting piece 60 in FIG. 3 from another perspective. In this embodiment, the connecting piece 60 is snapped into the eyeglass foot 24, and the connecting piece 60 and the host device 40 are connected by magnetic attraction. In some embodiments, the host 42 and the connecting piece 60 are connected by magnetic attraction. Specifically, the host 42 includes a strip-shaped housing 420, and the display device 45 is disposed on an end of the housing 420, and the housing 420 and the display device 45 form an L-shaped structure. The housing 420 includes an inner side wall 4201 facing towards the connecting piece 60, an outer side wall 4202 facing away from the inner side wall 4201, and an upper side wall 4203 and a lower side wall 4204 located at two opposite sides of the inner side wall 4201. The inner side wall 4201, the outer side wall 4202, the upper side wall 4203 and the lower side wall 4204 enclose an accommodation space. In this embodiment, the connecting piece 60 is connected to the inner side wall 4201 by the magnetic attraction.

The connecting piece 60 is provided with a first magnetic attraction element 61, and the host 42 is provided with a second magnetic attraction element 423. The first magnetic attraction element 61 and the second magnetic attraction element 423 are magnetically attracted to each other, thus the host device 40 can be detachably connected with the connecting piece 60. The first magnetic attraction element 61 and the second magnetic attraction element 423 may be a pair of magnets with opposite polarities. In other embodiments, the first magnetic attraction element 61 and the second magnetic attraction element 423 may be a magnet and an iron sheet, respectively.

The second magnetic attraction element 423 is disposed on the inner side wall 4201, and the first magnetic attraction element 61 is disposed on a side of the connecting piece 60 facing towards the inner side wall 4201. The second magnetic attraction element 423 may be disposed on an inner surface or an outer surface of the inner side wall 4201. In this embodiment, the outer surface of the inner side wall 4201 is provided with a positioning groove 4205, and the second magnetic attraction element 423 is disposed in the positioning groove 4205. In some embodiments, the second magnetic attraction element 423 is in a strip shape, and the positioning groove 4205 extends along a length direction of the inner side wall 423.

Electronic components such as a main control board 43 and a rechargeable battery 46 electrically connected to the main control board 43 are disposed in the housing 420, and a processor 432 is disposed on the main control board 43, that is, the electronic components such as the main control board 43 and the rechargeable battery 46 are accommodated in the accommodating space of the housing 420. The main control board 43 is electrically connected to the display device 45, and the rechargeable battery 46 provides power to the main control board 43, the processor 432 and the display device 45, and the main control board 43 and the processor 432 realize intelligent control of the smart eyeglasses 100. When the host device 40 is installed on the empty eyeglasses frame or the eyeglasses frame worn by the user through the connecting piece 60, the rechargeable battery 46 provides power, and the processor 432 performs controlling, and the display device 45 realizes the AR or VR use function of the smart eyeglasses.

In other embodiments, the second magnetic attraction element 423 may be disposed on the upper side wall 4203 or the lower side wall 4204.

The host device 40 of the smart eyeglasses 100 is provided with a charging connector 462, which is electrically connected to the rechargeable battery 46 through the main control board 43. The charging connector 462 is exposed from an outer surface of the housing 420, and the rechargeable battery 46 is charged through the charging connector 462. In this embodiment, the charging connector 462 is disposed at an end of the lower side wall 4204 of the housing 420 facing away from the display device 45, and the charging connector 462 is electrically connected to the rechargeable battery 46 through conducting wires. In other embodiments, the charging connector 462 may be disposed on the inner side wall 4201, the outer side wall 4202, the upper side wall 4203 of the housing 420 or an end wall facing away from the display device 45.

The connecting piece 60 is a rectangular strip. The connecting piece 60 includes two opposite side surfaces 62, a top side surface 63, a bottom side surface 64 and two opposite end surfaces 65. The first magnetic attraction element 61 is disposed on one of the side surfaces 62. The bottom side surface 64 of the connecting piece 60 is provided with a snapping groove 66, which extends along a length direction of the connecting piece 60, and opposite ends of the snapping groove 66 penetrate through the two end surfaces 65 of the connecting piece 60. The connecting piece 60 is snapped on the eyeglass foot 24 through the snapping groove 66. Specifically, the connecting piece 60 can be made of plastic material, and one of the side surfaces 62 of the connecting piece 60 is provided with a positioning groove, in which the first magnetic attraction element 61 is positioned.

In other embodiments, the first magnetic attraction element 61 may be omitted, the connecting piece 60 is made of iron, and the second magnetic attraction element 423 is a magnet.

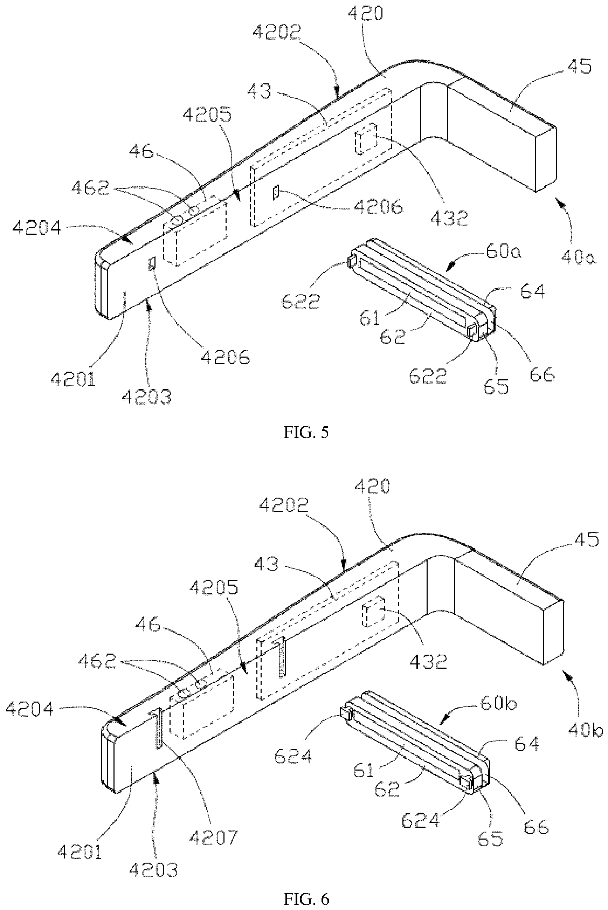

As illustrated in FIG. 5, FIG. 5 illustrates a schematic structural diagram of another connection mode between a connecting piece 60a and a host device 40a of the present disclosure. The structures of the connecting piece 60a and the host device 40a are similar to those of the connecting piece 60 and the host device 40 in the first embodiment, but the difference is that the connecting piece 60a and the housing 420 of the host 42 can be connected by snapping. Specifically, a side of the connecting piece 60a facing towards the housing 420 is provided with a hook 622, and the inner side wall 4201 of the housing 420 is provided with a snapping hole 4206, and the hook 622 can be snapped into the snapping hole 4206. In some embodiments, two opposite ends of the connecting piece 60a facing towards the housing 420 are respectively provided with hooks 622, and the inner side wall 4201 of the housing 420 is provided with snapping holes 4206 corresponding to the hooks 622, and each hook 622 can be snapped into the corresponding snapping hole 4206.

In other embodiments, the housing 420 is provided with a hook, the connecting piece is provided with a snapping hole corresponding to the hook, and the hook is detachably snapped into the snapping hole.

As illustrated in FIG. 6, FIG. 6 illustrates a schematic structural diagram of still another connection mode between a connecting piece 60b and a host device 40b of the present disclosure. The structures of the connecting piece 60b and the host device 40b are similar to those of the connecting piece 60 and the host device 40 in the first embodiment, but the difference is that the connecting piece 60b and the housing 420 of the host 42 can be detachably connected through a cooperation of a slide rail and a slide groove. Specifically, the inner side wall 4201 of the housing 420 is provided with a slide groove 4207, which extends in a direction perpendicular to a length direction of the housing 420, and the connecting piece 60b is provided with a slide rail 624 slidably inserted into the slide groove 4207, thus the connecting piece 60b can be detachably inserted into the housing 420. In some embodiments, two opposite ends of the connecting piece 60b facing towards the housing 420 are respectively provided with slide rails 624, and the inner side wall 4201 of the housing 420 is provided with slide grooves 4207 corresponding to the slide rails 624. An end of each slide groove 4207 passes through the lower side wall 4204 of the housing 420, and each slide rail 624 can be inserted into the corresponding slide groove 4207 from a side of the lower side wall 4204 to make the connecting piece 60b be detachably inserted into the housing 4207.

In other embodiments, the side of the connecting piece facing towards the housing 420 is provided with a slide groove, which extends in a direction perpendicular to a length direction of the connecting piece, and the inner side wall 4201 of the housing 420 is provided with a slide rail corresponding to the slide groove, the slide rail is slidably inserted into the slide groove, thus the connecting piece can be detachably inserted into the housing.

In other embodiments, the slide groove provided on the housing 420 or the connecting piece 60b can extend along the length direction of the housing 420 or the connecting piece 60b.

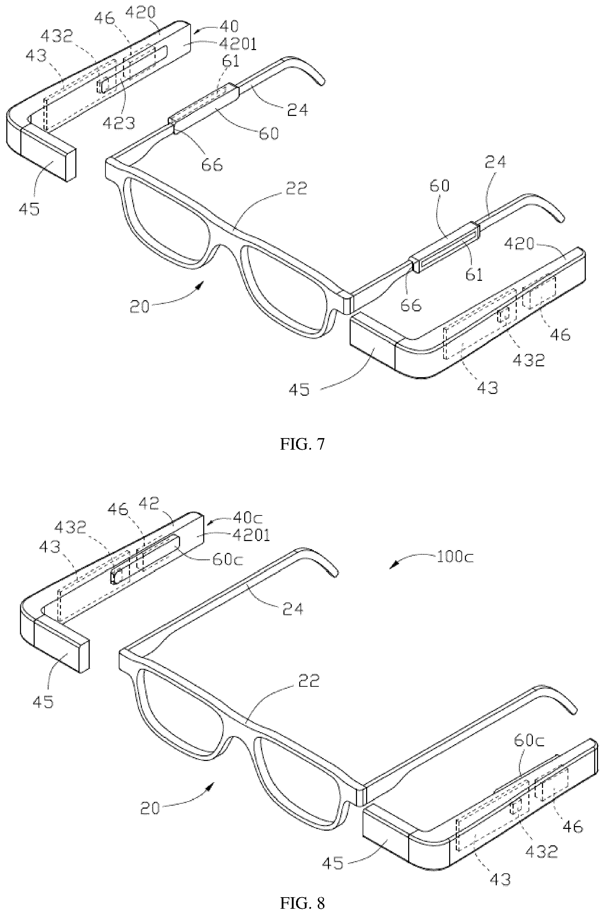

As illustrated in FIG. 1 and FIG. 7 together, and FIG. 7 illustrates a partial assembly view of the smart eyeglasses 100 in FIG. 2. When assembling the smart eyeglasses 100, the two connecting pieces 60 are respectively connected to the two eyeglass feet 24. Specifically, the two eyeglass feet 24 are respectively snapped into the snapping grooves 66 of the two connecting pieces 60, therefore each connecting piece 60 is fixed on the eyeglass foot 24, and the first magnetic attraction element 61 of each connecting piece 60 is located outside the eyeglasses frame 20. Two host devices 40 are respectively connected to two connecting pieces 60, specifically, the two host devices 40 are respectively placed on opposite sides of the eyeglasses frame 20, and the second magnetic attraction element 423 of each host device 40 is magnetically connected with the first magnetic attraction element 61 of the corresponding connecting piece 60. At this time, each host device 40 is fixedly connected to the eyeglasses frame 20, and the display device 45 is located at the front side of the lens frame 22.

When the smart eyeglasses 100 need to be used, the user can make an appropriate choice according to his own need. Specifically, if the user's eyesight is normal, the user can select a suitable empty eyeglasses frame, then fix the two connecting pieces 60 on the eyeglass feet 24 of the empty eyeglasses frame, and detachably connect the two host devices 40 to the two connecting pieces 60, and then wear the smart eyeglasses 100 and open it. If the user wears ordinary eyeglasses himself, the user can fix the two connecting pieces 60 on the eyeglass feet of the ordinary eyeglasses frame, and detachably connect the two host devices 40 to the two connecting pieces 60, and then wear and open the smart eyeglasses 100. The smart eyeglasses 100 can adapt to users with different eyesight.

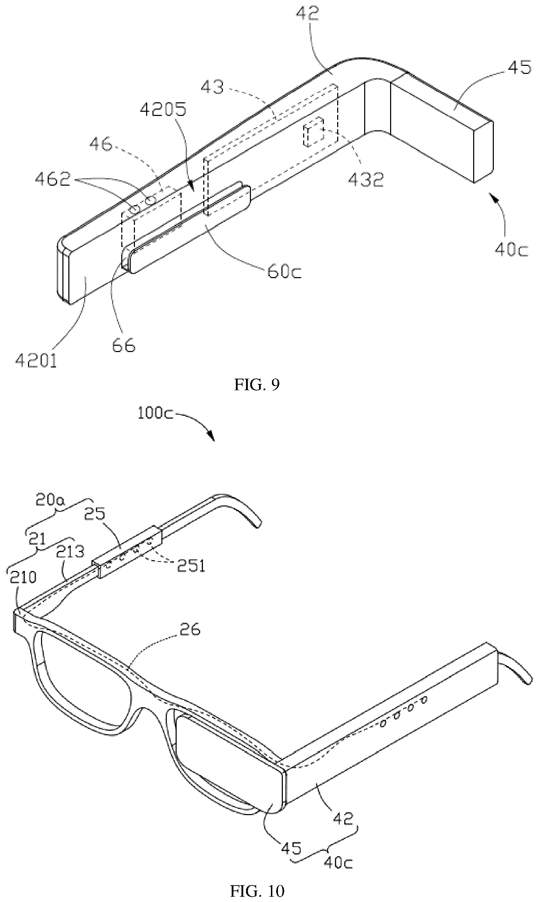

As illustrated in FIG. 8 and FIG. 9 together, FIG. 8 illustrates a schematic diagram of a three-dimensional structure of smart eyeglasses 100b according to a second embodiment of the present disclosure, FIG. 9 illustrates a schematic diagram of a three-dimensional structure of one of the host devices 40b in FIG. 8 from another perspective. The structure of the smart eyeglasses 100b in the second embodiment of the present disclosure is similar to that in the first embodiment, but the difference is that the connecting piece 60c is integrated with the host 42, and the connecting piece 60c is detachably connected with the eyeglass foot 24. Specifically, the connecting piece 60c is integrally formed with the housing of the host 42. The connecting piece 60c is provided with a snapping groove 66, and the eyeglass foot 24 is detachably snapped into the snapping groove 66, thus the host device 40b can be detachably connected to the eyeglass foot 24. The use method of the smart eyeglasses 100b in the second embodiment of the present disclosure is the same as that in the first embodiment, and the details thereof are not repeated here.

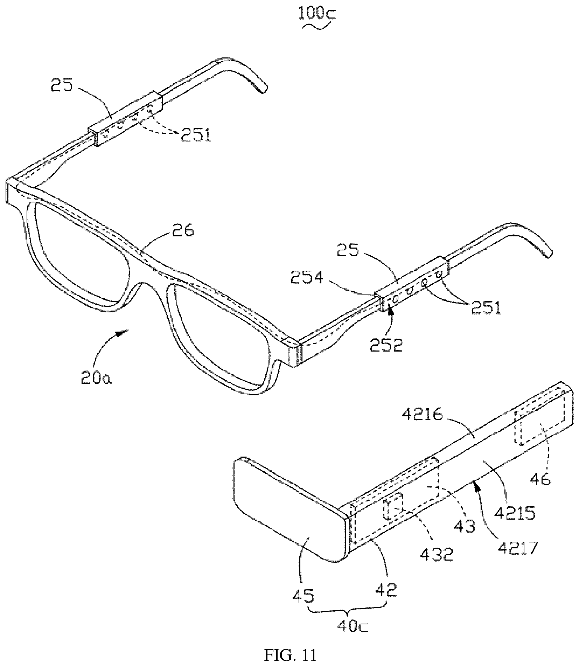

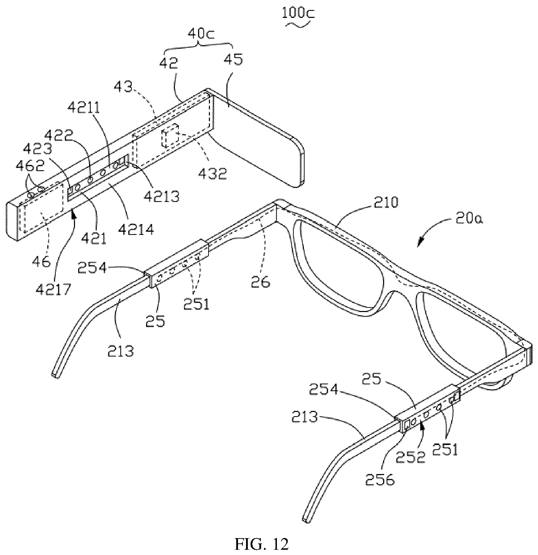

As illustrated in FIG. 10 to FIG. 12 together. FIG. 10 illustrates a schematic diagram of a three-dimensional structure of smart eyeglasses 100c according to a third embodiment of the present disclosure. FIG. 11 illustrates an exploded view of the three-dimensional structure of the smart eyeglasses 100c in FIG. 10. FIG. 12 illustrates an exploded view of the three-dimensional structure of the smart eyeglasses 100c in FIG. 11. Compared with the smart eyeglasses 100 of the first embodiment, in the smart eyeglasses 100c of the third embodiment of the present disclosure, the eyeglasses frame is fixedly connected with the connecting piece, and conducting wires and electronic contacts are added to the eyeglasses frame. Specifically, the smart eyeglasses 100c include an eyeglasses frame 20a and at least one host device 40c, the eyeglasses frame 20a includes a frame body 21 and a connecting piece 25, and the eyeglasses frame 20a can be, but is not limited to, an empty eyeglasses frame, a nearsighted eyeglasses frame, a hyperopia eyeglasses frame or an anti-light eyeglasses frame. The frame body 21 includes a lens frame 210 and two eyeglass feet 213 connected to opposite ends of the lens frame 210. Each eyeglass foot 213 is provided with at least one connecting piece 25, which can be fixed to the eyeglass foot 213 by snapping, screwing, gluing or integral molding. Each connecting piece 25 is detachably connected to the host device 40c. The host device 40c includes an AR glasses host, a VR glasses host, an earphone, a flashlight, a speaker or a camera, etc. These host devices 40c can be detachably connected to each connecting piece 25, that is, each connecting piece 25 can be connected with different types of host devices. In this embodiment, the host device 40c is an AR glasses host. Specifically, the host device 40c includes a host 42 and a display device 45 connected to the host 42. The host 42 is detachably connected to the connecting piece 25, thus the display device 45 is located at the front side of the lens frame 210. The empty eyeglasses frame is suitable for users with normal eyesight who do not need to wear eyeglasses, and the myopia eyeglasses frame, hyperopia eyeglasses frame or anti-light eyeglasses frame are respectively suitable for myopia users, hyperopia users or users who need light protection.

When the smart eyeglasses 100c of the present disclosure need to be used, if the user's eyesight is normal and he is not wearing eyeglasses, the user can select the appropriate empty eyeglasses frame, then select the required host device 40c, such as an AR eyeglasses host and a VR eyeglasses host, connect the selected host device 40c to the connecting piece 25, make the display device 45 face towards the lens frame of the empty eyeglasses frame, and then turn on the host device 40c for normal use. If the user is myopic or hyperopic, the lens suitable for him is first arranged on the lens frame 210, and then the required host device 40c, such as an AR glasses host and a VR glasses host, is selected, the selected host device 40c is connected to the connecting piece 25 and connected to the eyeglasses frame 20a, and then the smart eyeglasses 100c is turned on for normal use. After the use of the host device 40c is completed, the host device 40c can be removed from the connecting piece 25.

The smart eyeglasses 100c in this embodiment includes the eyeglasses frame 20a and the host device 40c, the eyeglass foot 213 of the eyeglasses frame 20a is provided with the connecting piece 25, and the host device 40c is detachably connected to the eyeglasses frame 20a through the connecting piece 25, and the eyeglasses frame 20a can be the empty eyeglasses frame or the eyeglasses frame worn by the user. In this embodiment, the host device 40c and the eyeglasses frame 20a of the smart eyeglasses 100c are set as two independent parts, and users can freely combine the host device 40c and the eyeglasses frame 20a according to their own needs. For example, if the user does not wear eyeglasses, the user can connect the host device 40c to the empty eyeglasses frame through the connecting piece 25 and turn on the host device 40c to normally use the smart eyeglasses 100c. If the user is myopic or hyperopic, it is necessary to first assemble a myopic lens or a hyperopic lens suitable for the user on the eyeglasses frame 20a, then connect the host device 40c to the eyeglasses frame 20a through the connecting piece 25, and turn on the host device 40c to normally use the smart eyeglasses 100c. Since each connecting piece 25 can be connected with different types of host devices 40c, users can select different types of host devices such as an AR glasses host, a VR glasses host, a headphone, a flashlight, a speaker or a camera to connect to the eyeglass feet 213 through the connecting pieces 25, which is highly versatile. That is, the smart eyeglasses 100c are not only suitable for users suffering from myopia, hyperopia, astigmatism, etc., but also suitable for users who do not need to wear ordinary eyeglasses themselves, and can also be used together with different types of host devices 40c, thus greatly improving the freedom of installing and using the host device 40c and taking off the host device, and being convenient to use; Secondly, the host device 40c is detachably mounted on the eyeglass foot 213 through the connecting piece 25. The host device 40c is small and compact, which is not only beautiful and light, but also conducive to the popularization of the smart eyeglasses 100c to a large number of people, thus more ordinary consumers can experience the convenience brought by AR and VR technologies. In addition, when the host device 40c is not needed, the host device 40c can be separated from the eyeglasses frame 20a without affecting the normal use of the eyeglasses frame 20a, which is convenient to use.

In this embodiment, the smart eyeglasses 100c include the host device 40c, which can be detachably connected to one of the two connecting pieces 25, and the display device 45 of the host device 40c faces towards the lens frame 210.

In some embodiments, the smart eyeglasses 100c include two or more host devices 40c, and each connecting piece 25 can be detachably connected to these host devices 40c.

As illustrated in FIGS. 10 to 14, the smart eyeglasses 100c further include a conducting wire 26 disposed in the frame body 21, and each connecting piece 25 is provided with a first electronic contact 251. The opposite ends of the conducting wire 26 are respectively electrically connected to the first electronic contacts 251 of the connecting pieces 25 on the two eyeglass feet 213, that is, the first electronic contacts 251 on the two connecting pieces 25 are electrically connected through the conducting wire 26. The host device 40c is provided with a second electronic contact 422 corresponding to the first electronic contact 251. When the host device 40c is connected to the connecting piece 25, the first electronic contact 251 is in contact with and electrically connected with the second electronic contact 422. A wire slot (not illustrated in the figure) can be opened in the frame body 21, the opposite ends of the wire slot are respectively communicated with the connecting pieces 25, the conducting wire 26 is accommodated in the wire slot, and the opposite ends of the conducting wire 26 are respectively electrically connected to the first electronic contacts 251 of the two connecting pieces 25. In this embodiment, the frame body 21 is provided with multiple conducting wires 26, and the opposite ends of each conducting wire 26 are respectively electrically connected to the first electronic contacts 251 of the two connecting pieces 25.

In some embodiments, the conducting wires 26 can be embedded in the frame body 21. The opposite ends of the conducting wire 26 are respectively electrically connected to the first electronic contacts 251 of the two connecting pieces 25, thus the first electronic contacts 251 of the two connecting pieces 25 are electrically connected with each other.

In this embodiment, each connecting piece 25 is a rectangular strip fixed on the eyeglass foot 213. The connecting piece 25 includes an outer side surface 252, an inner side surface opposite to the outer side surface 252, a top side surface, a bottom side surface and two opposite end surfaces 254. The connecting piece 25 is provided with a fixing hole, which extends along a length direction of the connecting piece 25, and the opposite ends of the fixing hole respectively pass through two opposite end faces 254 of the connecting piece 25, and the eyeglass foot 213 is snapped into the fixing hole. Multiple first electronic contacts 251 are disposed on the outer side surface 252 of the connecting piece 25. In some embodiments, these first electronic contacts 251 are arranged at intervals along the length direction of the connecting piece 25. The connecting piece 25 can be made of plastic material or rubber material.

The connecting piece 25 and the host device 40c can be connected by magnetic attraction. In some embodiments, the host 42 and the connecting piece 25 are connected by magnetic attraction. Specifically, the connecting piece 25 further includes a first magnetic attraction element 256 disposed on the connecting piece 25, and a second magnetic attraction element 423 is disposed on the host 42, and the first magnetic attraction element 256 and the second magnetic attraction element 423 are magnetically attracted to each other, thus the host device 40 can be detachably connected with the connecting piece 25. The first magnetic attraction element 256 and the second magnetic attraction element 423 may be a pair of magnets with opposite polarities. In other embodiments, the first magnetic attraction element 256 and the second magnetic attraction element 423 may be a magnet and an iron sheet, respectively.

In some embodiments, the host device 40c is provided with a positioning hole 421, and the connecting piece 25 is detachably snapped into the positioning hole 421. The first electronic contacts 251 are disposed on the outer surface of the connecting piece 25, and the second electronic contacts 422 are disposed on the inner surface of the positioning hole 421. Specifically, the positioning hole 421 is disposed on a side of the host 42 facing towards the display device 45, and includes a bottom surface 4211 and a side surface 4213 surrounding the bottom surface 4211, and the second electronic contacts 422 are disposed on the bottom surface 4211 of the positioning hole 421. The second electronic contacts 422 are disposed on the outer side surface 252 of the connecting piece 25. When the outer side surface of the connecting piece 25 is snapped into the positioning hole 421, the first electronic contacts 251 and the second electronic contacts 422 are respectively contacted and electrically connected. In this embodiment, the positioning hole 421 is a strip hole, and the second electronic contacts 422 are arranged at intervals along the length direction of the positioning hole 421.

The first magnetic attraction element 256 is arranged close to the outer side surface 252 of the connecting piece 25. In some embodiments, the two opposite ends of the outer side surface 252 of the connecting piece 25 are respectively provided with the first magnetic attraction elements 256. The second magnetic attraction element 423 is positioned on the inner surface of the positioning hole 421 corresponding to the first magnetic attraction element 256. In some embodiments, two opposite ends of the bottom surface 4211 of the positioning hole 421 are respectively provided with the second magnetic attraction elements 423. When the outer side surface 252 of the connecting piece 25 is snapped into the positioning hole 421, each of the first magnetic attraction elements 256 and the corresponding second magnetic attraction element 423 are magnetically attracted to each other, thus the host device 40c can be detachably positioned on the connecting piece 25.

In other embodiments, the first magnetic attraction element 256 can be located close to the top side surface and/or bottom side surface of the connecting piece 25, and the second magnetic attraction element 423 is located at the side surface 4213 of the positioning hole 421 corresponding to the first magnetic attraction element 256.

In other embodiments, the first electronic contacts 251 are arranged on the top side surface and/or the bottom side surface of the connecting piece 25, and the second electronic contacts 422 are arranged on the side surface 4213 of the positioning hole 421 of the host computer 42. When the connecting piece 25 is inserted into the positioning hole 421, the first electronic contacts 251 and the second electronic contacts 422 are respectively contacted and electrically connected.

The host 42 includes a strip-shaped housing, and the display device 45 is arranged at an end of the housing, and the housing and the display device 45 form an L-shaped structure. The housing includes an inner side wall 4214 facing towards the connecting piece 25, an outer side wall 4215 facing away from the inner side wall 4214, and an upper side wall 4216 and a lower side wall 4217 located at opposite sides of the inner side wall 4214. The inner side wall 4214, the outer side wall 4215, the upper side wall 4216 and the lower side wall 4217 enclose an accommodation space. In this embodiment, the positioning hole 421 is located on the outer surface of the inner side wall 4214, and the second magnetic attraction element 423 is located on the bottom surface 4211 of the positioning hole 421.

In other embodiments, the host device 40c may have a rectangular structure, an arc structure or the like.

Electronic components such as a main control board 43 and a rechargeable battery 46 electrically connected to the main control board 43 are disposed in the housing of the host 42, and a processor 432 is disposed on the main control board 43, that is, the electronic components such as the main control board 43 and the rechargeable battery 46 are accommodated in the accommodating space of the housing. The main control board 43 is electrically connected to the display device 45 and the second electronic contact 422. The rechargeable battery 46 supplies power to the main control board 43, the processor 432 and the display device 45, and the main control board 43 and the processor 432 realize intelligent control of the smart eyeglasses 100c. When the host device 40c is installed on the eyeglasses frame 20a through the connecting piece 25 for use, the rechargeable battery 46 provides power, and the processor 432 performs controlling, and the use function of smart eyeglasses is realized through the display device 45.

The host device 40c is provided with a charging connector 462, which is electrically connected to the rechargeable battery 46 through the main control board 43. The charging connector 462 is exposed from the outer surface of the host 42, and the rechargeable battery 46 is charged through the charging connector 462. In this embodiment, the charging connector 462 is disposed on an end of the upper side wall 4216 of the housing 421 facing away from the display device 45, and the charging connector 462 is electrically connected to the rechargeable battery 46 through conducting wires. In other embodiments, the charging connector 462 may be disposed on the inner side wall 4214, the outer side wall 4215, the lower side wall 4217 of the housing 421 or an end wall facing away from the display device 45.

In other embodiments, the first magnetic attraction element 256 can be omitted, the connecting piece 25 is made of iron, and the second magnetic attraction element 423 is a magnet.

As illustrated in FIGS. 10 to 13 together, when the smart eyeglasses 100c need to be used, the user should make appropriate choices according to his own needs. Specifically, if the user's eyesight is normal, he can select an appropriate lens frame 210 and detachably connect the required host device 40c to the connecting piece 25. The user can wear the smart eyeglasses 100c and turn on the host device 40c. If the user needs to wear myopia eyeglasses, hyperopia eyeglasses or anti-light eyeglasses, the user can first assemble appropriate myopia eyeglasses, hyperopia eyeglasses or anti-light eyeglasses on the lens frame 210, and detachably connect the required host device 40c to the connecting piece 25, and then wear the smart eyeglasses 100c and turn on the host device 40c. The smart eyeglasses 100c can adapt to users with different eyesight and are convenient to use. When it is necessary to remove the host device 40c after the smart eyeglasses 100c are used, it is only necessary to remove the host device 40c from the connecting piece 25, and the eyeglasses frame 20a can be used continuously, with simple operation and convenient use.

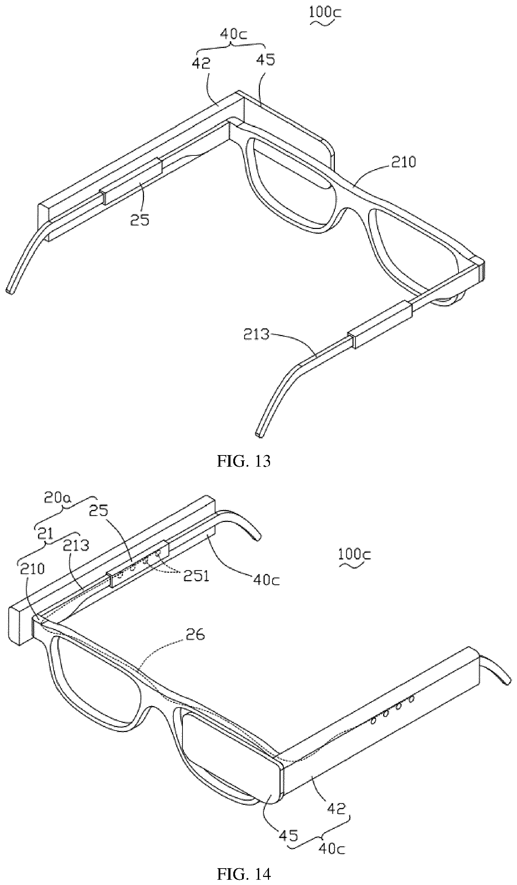

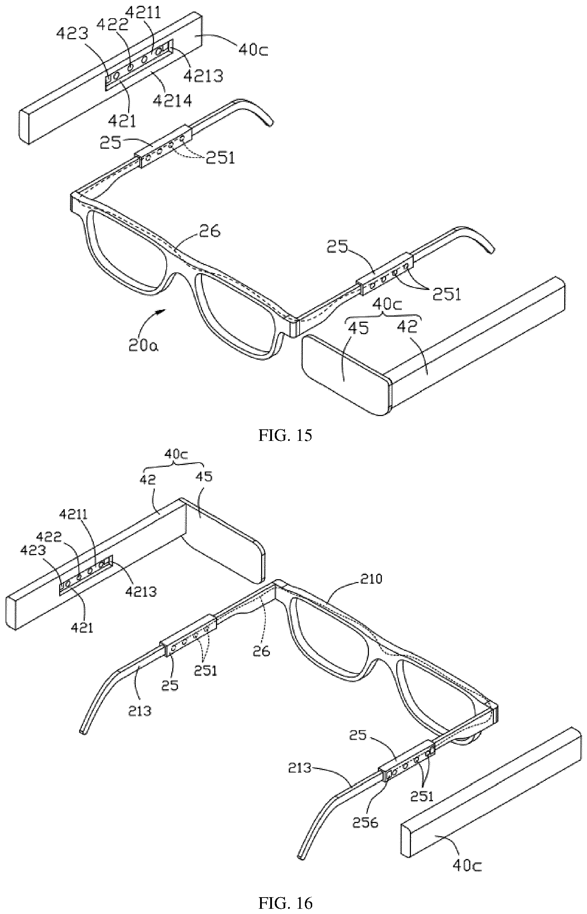

As illustrated in FIGS. 14 to 16 together, in another embodiment of the smart eyeglasses 100c of the present disclosure, when the user needs to use two different types of host devices 40c on the eyeglasses frame 20a, for example, one of the two different types of host devices 40c can be an AR eyeglasses host and the other can be an earphone; The user can make appropriate choices according to his own needs. Specifically, if the user's eyesight is normal, he can select an appropriate lens frame 210, and then detachably connect the two selected host devices 40c to the two connecting pieces 25, thus the second electronic contacts 422 of each host device 40c are electrically connected with the corresponding first electronic contacts 251, and the user can wear the smart eyeglasses 100 and turn on the host device 40c. If the user needs to wear myopia eyeglasses, hyperopia eyeglasses or anti-light eyeglasses, the user can install appropriate myopia eyeglasses, hyperopia eyeglasses or anti-light eyeglasses on the lens frame 210, and detachably connect the required two host devices 40c to the two connecting pieces 25, and then wear the smart eyeglasses 100c and turn on the host device 40c. The smart eyeglasses 100 can adapt to users with different eyesight and are convenient to use. When it is necessary to remove the host device 40c after the smart eyeglasses 100c are used, the host device 40c is removed from the connecting piece 25, and the eyeglasses frame 20a can be used continuously, with simple operation and convenient use.

At this time, because the second electronic contacts 422 of each host device 40c are electrically connected to the corresponding first electronic contacts 251, the two host devices 40c are electrically connected through the conducting wire 26, thus the two host devices 40c can communicate and share battery energy. Specifically, information such as audio signals, video signals, sensor signals, processor signals and stored data can be transmitted between the two host devices 40c, so as to improve the user experience. The shared battery energy means that the battery of one host device 40c can enable the other host device 40c to provide power.

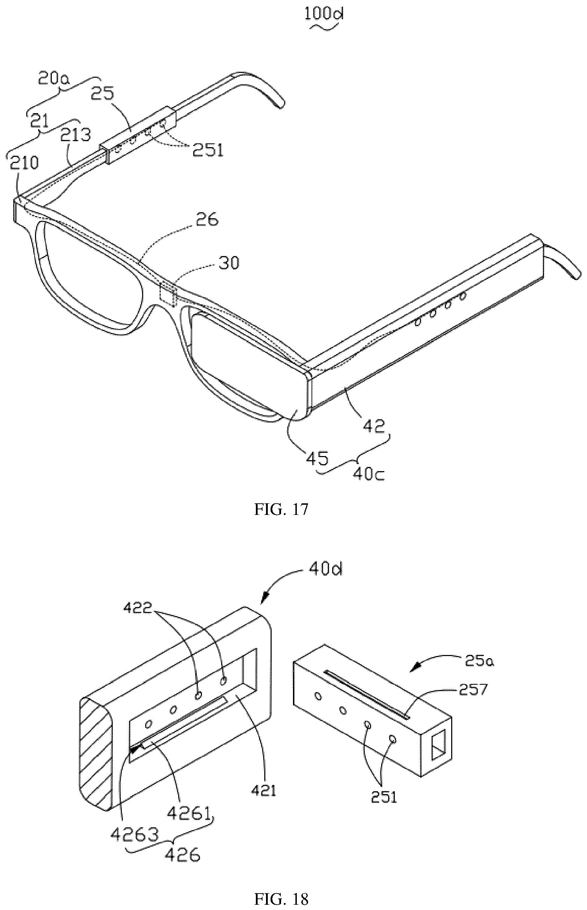

As illustrated in FIG. 17, FIG. 17 illustrates a schematic diagram of a three-dimensional structure of smart eyeglasses according to a fourth embodiment of the present disclosure. The structure of the smart eyeglasses 100d in the fourth embodiment of the present disclosure is similar to that of the smart eyeglasses 100c in the third embodiment, but the difference is that the smart eyeglasses 100d in the fourth embodiment is added with a chip 30 on the basis of the smart eyeglasses 100c in the third embodiment, and the chip 30 is disposed in the eyeglasses frame 20a, and is electrically connected to the conducting wire 26, that is, the chip 30 is electrically connected to the first electronic contacts 251 of the two connectors 25 through the conducting wire 26. The chip 30 is an encryption chip, and the encryption chip has an encryption function to prevent the pirated eyeglasses frame.

In some embodiments, the chip 30 is used to manage the communication between the host devices 40c on the two eyeglass feet 213 and the cooperation between power supplies. Specifically, the chip 30 controls the power sharing of the host devices 40c on the two eyeglass feet 213. When the power of one host device 40c is insufficient, the chip 30 controls the power of the other host device 40c to supply power to the one host device 40c. If only one of the host devices 40c on the two eyeglass feet 213 works, the chip 30 can control the power supply of the non-working host device 40c to provide power to the one host device 40c. When the host devices 40c on the two eyeglass feet 213 are both working, the chip 30 can control the information transfer between the two host devices 40c, such as audio signals, video signals, sensor signals, processor signals and stored data, for the convenience of users.

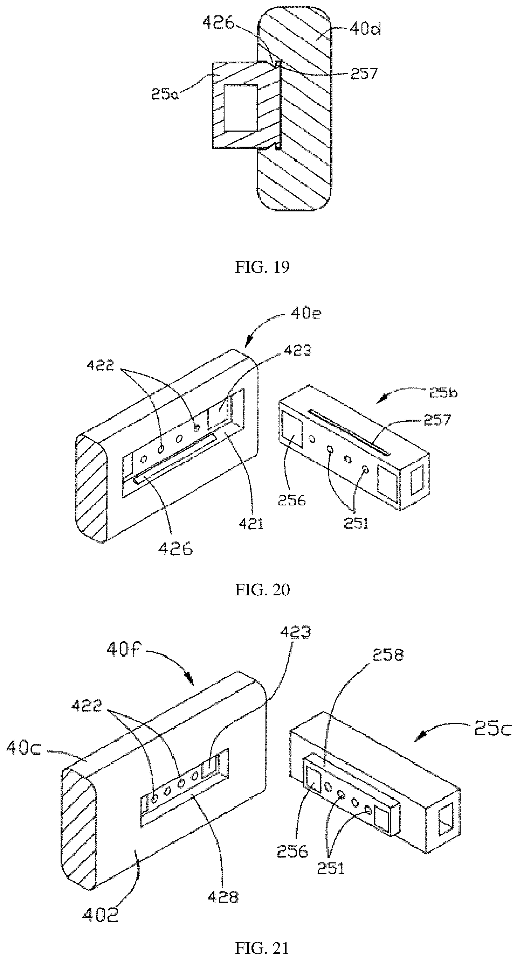

As illustrated in FIG. 18 and FIG. 19 together, FIG. 18 illustrates a schematic diagram of three-dimensional structures of a part of a host device 40d and a connecting piece 25a of smart eyeglasses according to a fifth embodiment of the present disclosure. FIG. 19 illustrates a sectional view of the host device 40d assembled with the connecting piece 25a in FIG. 18. The structure of the smart eyeglasses in the fifth embodiment of the present disclosure is similar to that of the smart eyeglasses 100c in the third embodiment, but the difference is that a connection mode between the connecting piece 25a and the host device 40d of the smart eyeglasses in the fifth embodiment is slightly different from that in the third embodiment, and the connecting piece 25a omits the first magnetic attraction element 256 on the basis of the connecting piece 25 in the third embodiment. The host device 40d omits the second magnetic attraction element 423 on the basis of the host device 40c in the third embodiment, and the inner surface of the positioning hole 421 is provided with at least one positioning part 426, and the outer surface of the connecting piece 25a is provided with a positioning groove 257 corresponding to at least one positioning part 426. When the connecting piece 25a is inserted into the positioning hole 421, the positioning part 426 is inserted into the positioning groove 257 to prevent the connecting piece 25a from being separated from the positioning hole 421.

In some embodiments, the host device 40d is provided with two positioning parts 426 on two opposite inner sides of the positioning hole 421, and each positioning part 426 is a resilient positioning bar. The upper side surface and the lower side surface of the connecting piece 25a are respectively provided with the positioning grooves 257. When the connecting piece 25a is snapped into the positioning hole 421, the two positioning bars are respectively snapped into the two positioning grooves 257, thus the connection between the connecting piece 25a and the host device 40a is firmer. Specifically, each positioning part 426 includes a guide sliding surface 4261 facing towards an opening of the positioning hole 421 and a stop surface 4263 facing away from the opening of the positioning hole 421. During the snapping process of the connecting piece 25a into the positioning hole 421, the connecting piece 25a slides against the guide sliding surface 4261, thus each positioning part 426 is resiliently deformed until each positioning part 426 faces the towards the corresponding positioning groove 257. The positioning part 426 is elastically restored and snapped into the positioning groove 257, thus the stop surface 4263 of the positioning part 426 is abutted against the inner surface of the positioning groove 257 to prevent the connecting piece 25a from being separated from the positioning hole 421.

When assembling the host device 40d to the connecting piece 25a, the connecting piece 25a is directly snapped into the positioning hole 421 of the host device 40d until the two positioning parts 426 are respectively snapped into the two positioning grooves 257, thus the connecting piece 25a is fixedly connected with the host device 40d. At this time, the first electrical contacts 251 of the connecting piece 25a respectively contact the second electrical contacts 422 of the host device 40d to be electrically connected with each other. When the host device 40d is removed from the connecting piece 25a, the host device 40d is pulled to a side facing away from the connecting piece 25a, the two positioning parts 426 are separated from the two positioning grooves 257, and then the connecting piece 25a is separated from the positioning hole 421. Therefore, the assembly or disassembly of the host device 40d and the connecting piece 25a is simple and convenient to use.

In other embodiments, the positioning part 426 may be, but not limited to, a circular protrusion, a spring ball, etc., and the positioning groove 257 may be, but not limited to, a circular hole.

In other embodiments, the host device 40d is provided with at least one positioning groove on the inner surface of the positioning hole 421, and the outer surface of the connecting piece 25a is provided with a positioning part corresponding to the at least one positioning groove. When the connecting piece 25a is inserted into the positioning hole 421, the positioning part is snapped into the positioning groove, thus connecting piece 25a and the host device 40d are relatively positioned. In some embodiments, the host device 40d is provided with two opposite positioning grooves on the inner peripheral surface of the positioning hole 421, and the outer peripheral surface of the connecting piece 25a is provided with two positioning parts corresponding to the two positioning grooves. When the connecting piece 25a is snapped into the positioning hole 421 of the host device 40d, the two positioning parts are snapped into the two positioning grooves respectively, thus the connecting piece 25a and the host device 40d are relatively positioned.

As illustrated in FIG. 20, FIG. 20 illustrates a schematic diagram of three-dimensional structures of a part of a host device 40e and a connecting piece 25b of smart eyeglasses according to a sixth embodiment of the present disclosure. The structure of the smart eyeglasses in the sixth embodiment of the present disclosure is similar to that of the smart eyeglasses 100c in the third embodiment, but the differences are as follows: a connection mode between the connecting piece 25b and the host device 40e of the smart eyeglasses in the sixth embodiment is slightly different from that in the third embodiment, the connecting piece 25b and the host device 40e are connected through a positioning groove and a positioning part in coordination. Specifically, the host device 40e is provided with positioning parts 426 on the two opposite inner sides of the positioning hole 421, and the upper and lower sides of the connecting piece 25b are respectively provided with positioning grooves 257. When the connecting piece 25b is snapped into the positioning hole 421, each first magnetic attraction element 256 is magnetically attracted to the corresponding second magnetic attraction element 423, and the two positioning parts 426 are respectively snapped into the two positioning grooves 257, so as to make the connection between the connecting piece 25a and the host device 40e more secure to prevent the connecting piece 25b from detaching from the positioning hole 421. At this time, multiple first electronic contacts 251 of the connecting piece 25b respectively contact multiple second electronic contacts 422 of the corresponding host device 40e.

In other embodiments, the host device 40e is provided with at least one positioning groove on the inner surface of the positioning hole 421, and the outer surface of the connecting piece 25b is provided with a positioning part corresponding to the at least one positioning groove. When the connecting piece 25b enters the positioning hole 421, the positioning part is snapped into the positioning groove, thus the connecting piece 25b and the host device 40e are positioned relatively. In some embodiments, the host device 40e is provided with two opposite positioning grooves on the inner peripheral surface of the positioning hole 421, and the outer peripheral surface of the connecting piece 25b is provided with two positioning parts corresponding to the two positioning grooves; When the connecting piece 25b is snapped into the positioning hole 421 of the host device 40e, the two positioning parts are respectively snapped into the two positioning grooves, thus the connecting piece 25b and the host device 40e are relatively positioned. At this time, the first electronic contacts 251 of the connecting piece 25b respectively contact the second electronic contacts 422 of the corresponding host device 40e.

As illustrated in FIG. 21, FIG. 21 illustrates a schematic diagram of three-dimensional structures of a part of a host device 40f and a connecting piece 25c of smart eyeglasses according to a seventh embodiment of the present disclosure. The structure of the smart eyeglasses in the seventh embodiment of the present disclosure is similar to that of the smart eyeglasses 100c in the third embodiment, but the difference is that the connection mode between the connecting piece 25c and the host device 40f of the smart eyeglasses in the seventh embodiment is slightly different from that in the third embodiment. Specifically, the connecting piece 25c in the seventh embodiment is provided with a snapping block 258, and the host device 40f is provided with a snapping hole 428 corresponding to the snapping block 258. The first electronic contacts 251 are disposed on the outer surface of the snapping block 258, the second electronic contacts 422 are disposed on the inner surface of the snapping hole 428, and the snapping block 258 is snapped into the snapping hole 428, thus the host device 40f is connected to the connecting piece 25c. At this time, the first electrical contacts 251 of the connecting piece 25c respectively contact the second electrical contacts 422 of the host device 40f and are electrically connected with each other.

In some embodiments, the snapping block 258 is provided with at least one first magnetic attraction element 256, and the host device 40f is provided with a second magnetic attraction element 423 corresponding to the first magnetic attraction element 256. When the snapping block 258 is snapped into the snapping hole 428, the first magnetic attraction element 256 and the second magnetic attraction element 423 attract each other to make the positioning of the host device 40f and the connecting piece 25c more stable. Furthermore, two opposite ends of the snapping block 258 are respectively provided with first magnetic attraction elements 256, and the bottom surface of the snapping hole 428 is provided with two second magnetic attraction elements 423 corresponding to the two first magnetic attraction elements 256.

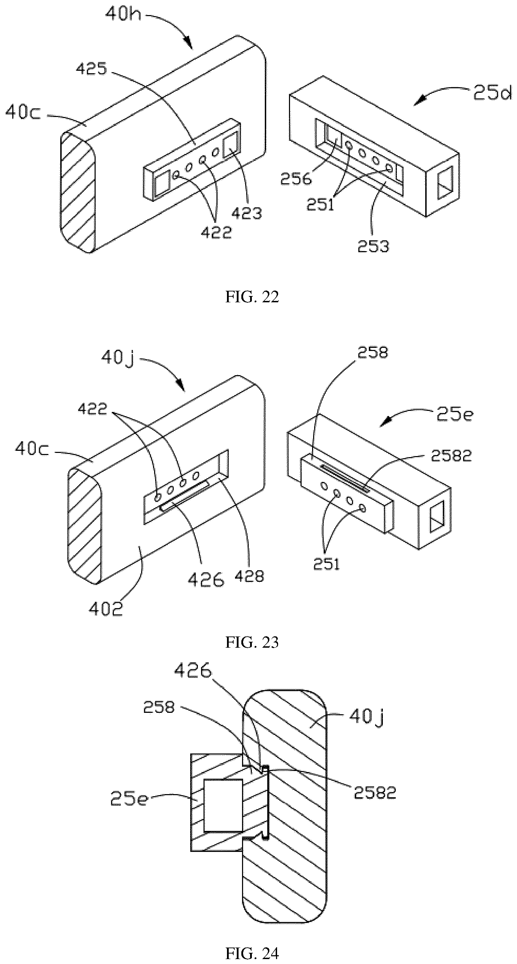

As illustrated in FIG. 22, FIG. 22 illustrates a schematic diagram of three-dimensional structures of a part of a host device 40h and a connecting piece 25d of smart eyeglasses according to an eighth embodiment of the present disclosure. The structure of the smart eyeglasses in the eighth embodiment of the present disclosure is similar to that of the smart eyeglasses in the seventh embodiment, except that the connecting piece 25d is provided with a snapping hole 253, the host device 40h is provided with a snapping block 425 corresponding to the snapping hole 253, the first electronic contacts 251 are disposed on the inner surface of the snapping hole 253, the second electronic contacts 422 are disposed on the outer surface of the snapping block 425, the snapping block 425 is snapped into the snapping hole 253 to connect the host device 40d to the connecting piece 25d.

In some embodiments, the host device 40h is provided with at least one first magnetic attraction element 256 on the inner surface of the snapping hole 253, and the snapping block 425 is provided with at least one second magnetic attraction element 423 corresponding to the at least one first magnetic attraction element 423. When the snapping block 425 is snapped into the snapping hole 253, the first magnetic attraction element 256 and the second magnetic attraction element 423 are magnetically attracted to each other, making the positioning of the host device 40h and the connecting piece 25d more stable. Furthermore, two opposite ends of the snapping block 425 are respectively provided with second magnetic attraction pieces 423, and the bottom surface of the snapping hole 253 is provided with two first magnetic attraction pieces 256 corresponding to the two second magnetic attraction elements 423.

As illustrated in FIG. 23 and FIG. 24 together, FIG. 23 illustrates a schematic diagram of three-dimensional structures of a part of a host device 40j and a connecting piece 25e of smart eyeglasses according to a ninth embodiment of the present disclosure. FIG. 24 illustrates a sectional view of the host device 40j assembled with the connecting piece 25e in FIG. 23. The structure of the smart eyeglasses in the ninth embodiment of the present disclosure is similar to that of the smart eyeglasses in the seventh embodiment, but the difference is that the connection mode between the connecting piece 25e and the host device 40j of the smart eyeglasses in the ninth embodiment is slightly different from that in the seventh embodiment, the inner surface of the snapping hole 428 of the host device 40j is provided with at least one positioning part 426, and the outer surface of the snapping block 258 of the connecting piece 25e is provided with a positioning groove 2582 corresponding to the at least one positioning part 426. When the snapping block 258 is snapped into the snapping hole 428, the positioning part 426 is snapped into the positioning groove 2582 to prevent the connecting piece 25e from being separated from the snapping hole 428.

In some embodiments, the host device 40j is provided with two positioning parts 426 on two opposite inner sides of the snapping hole 428, and each positioning part 426 is a resilient positioning bar. The upper side surface and the lower side surface of the snapping block 258 are respectively provided with the positioning grooves 2852. When the snapping block 258 is snapped into the snapping hole 428, the two positioning bars are respectively snapped into the two positioning grooves 2852, thus the connection between the connecting piece 25e and the host device 40j is firmer, and the connecting piece 25e is prevented from being separated from the clamping hole 428.

When assembling the host device 40j to the connecting piece 25e, the snapping block 258 is directly snapped into the snapping hole 428 of the host device 40j until the two positioning parts 426 are respectively snapped into the two positioning grooves 2852, thus the connecting piece 25e is fixedly connected with the host device 40j. At this time, the first electrical contacts 251 of the connecting piece 25e respectively contact the second electrical contacts 422 of the host device 40j to be electrically connected with each other. When the host device 40j is removed from the connecting piece 25e, the host device 40j is pulled to a side facing away from the connecting piece 25e, the two positioning parts 426 are separated from the two positioning grooves 2582, and then the connecting piece 25e is separated from the snapping hole 428. Therefore, the assembly or disassembly of the host device 40j and the connecting piece 25e is simple and convenient to use.

In other embodiments, the host device 40j is provided with at least one positioning groove on the inner surface of the snapping hole 428, and the outer surface of the connecting piece 25e is provided with a positioning part corresponding to at least one positioning groove. When the snapping block 258 is inserted into the snapping hole 428, the positioning part is snapped into the positioning groove, thus the connecting piece 25a and the host device 40j are relatively positioned. In some embodiments, the host device 40j is provided with two opposite positioning grooves on the inner peripheral surface of the snapping hole 428, and the outer peripheral surface of the connecting piece 25e is provided with two positioning parts corresponding to the two positioning grooves. When the snapping block 258 is snapped into the positioning hole 421 of the host device 40j, the two positioning parts are respectively snapped into the two positioning grooves, thus the connecting piece 25e and the host device 40e are relatively positioned.

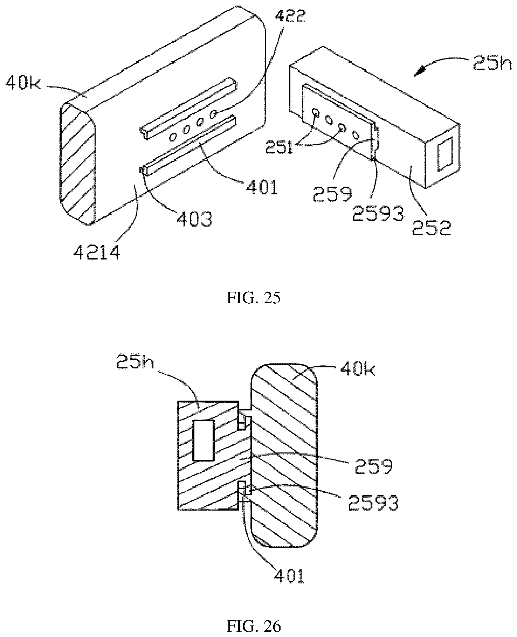

As illustrated in FIG. 25 to FIG. 26 together, FIG. 25 illustrates a schematic diagram of three-dimensional structures of a part of a host device 40k and a connecting piece 25h of smart eyeglasses according to a tenth embodiment of the present disclosure. FIG. 26 illustrates a sectional view of the host device 40k assembled with the connecting piece 25h illustrated in FIG. 25. The structure of smart eyeglasses in the tenth embodiment of the present disclosure is similar to that of smart eyeglasses 100c in the third embodiment, but the difference is that the connection structure between connecting piece 25h and host device 40k in the tenth embodiment is different from that between connecting piece 25 and host device 40c in the third embodiment. Specifically, in the tenth embodiment, the connecting piece 25h and the host device 40k are connected through the matching of the slide rail 259 and the guide slide rail 401, one of the slide rail 259 and the guide slide rail 401 is disposed on the connecting piece 25h, and the other of the slide rail 259 and the guide slide rail 401 is disposed on the host device 40k. After the slide rail 401 and the guide slide rail 259 are connected in place, the first electronic contacts 251 are electrically connected to the second electronic contacts 422, that is, the first electronic contacts 251 are respectively contacted with the second electronic contacts 422 to realize electrical connection.

In this embodiment, the guide slide rail 401 is disposed on the inner side wall 4214 of the host device 40k, and the slide rail 259 is disposed on the outer side surface 252 of the connecting piece 25h. The guide slide rail 401 has a guide groove 403 extending along a length direction of the guide slide rail 401, and the slide rail 259 includes a rail body 2593 slidably inserted into the guide groove 403. In some embodiments, the inner side wall 4214 of the host device 40k is provided with two parallel guide slide rails 401 at intervals, and the interval between the two guide slide rails 401 is used for accommodating the slide rail 259. The two opposite sides of the slide rail 259 are respectively provided with the rail bodies 2593 protruding outward, and the two rail bodies 2593 are parallel to each other, and each rail body 2593 extends along the length direction of the guide groove 403. The first electronic contacts 251 are disposed on a side of the slide rail 259 facing away from the outer side surface 252, and are disposed between the two rail bodies 2593. The second electronic contacts 422 are disposed on the inner side wall 4214 and between the two guide slide rails 401.

When assembling the host device 40k to the connecting piece 25h, the host device 40k is placed at an end of the connecting piece 25h, thus the two rail bodies 2593 respectively face toward the two guide grooves 403, and the host device 40k is moved relative to the connecting piece 25h, and the two rail bodies 2593 are respectively inserted into the two guide grooves 403 in a sliding manner. At this time, the first electronic contacts 251 respectively contact the second electronic contacts 422, each first electronic contact 251 is electrically connected to the corresponding second electronic contact 422. When the host device 40k is removed from the connecting piece 25h, the host device 40k is moved relative to the connecting piece 25h, and the host device 40k slides relative to the connecting piece 25h until the rail body 2593 is separated from the corresponding guide groove 403. Therefore, the assembly or disassembly of the host device 40k and the connecting piece 25h is simple and convenient to use.

The above is the implementation of the embodiments of the present disclosure. It should be pointed out that for those skilled in the art, several improvements and embellishments can be made without departing from the principle of the embodiments of the present disclosure, and these improvements and embellishments are also regarded as the scope of protection of the present disclosure.

## Claims

1. Smart eyeglasses for a user to wear, comprising:
an eyeglasses frame, the eyeglasses frame being an empty eyeglasses frame or an eyeglasses frame worn by the user;
at least one host device, each host device comprising: a host and a display device connected to the host; and
a connecting piece, the at least one host device being detachably connected to the empty eyeglasses frame or the eyeglasses frame worn by the user through the connecting piece.

2. The smart eyeglasses according to claim 1, wherein the empty eyeglasses frame or the eyeglasses frame worn by the user comprises: an eyeglass foot, the connecting piece is connected between the eyeglass foot and the host.

3. The smart eyeglasses according to claim 2, wherein the connecting piece is snapped on the eyeglass foot, and the connecting piece is connected with the host through magnetic attraction.

4. The smart eyeglasses according to claim 2, wherein the connecting piece and the host are integrated into a whole, and the connecting piece is detachably connected with the eyeglass foot.

5. The smart eyeglasses according to claim 2, wherein the connecting piece is provided with a snapping groove, and the eyeglass foot is detachably snapped into the snapping groove.

6. The smart eyeglasses according to claim 1, wherein the connecting piece and the host are detachably connected through a cooperation of a slide rail and a slide groove.

7. An eyeglasses frame for supporting host devices, comprising a frame body and connecting pieces; wherein the frame body comprises two eyeglass feet, each of the two eyeglass feet is provided with at least one of the connecting pieces, and each of the connecting pieces is detachably connected to one of the host devices.

8. The eyeglasses frame according to claim 7, comprising: a conducting wire disposed in the frame body; wherein each of the connecting pieces is provided with a first electronic contact, two opposite ends of the conducting wire are respectively electrically connected with the first electronic contacts of the connecting pieces on the two eyeglass feet, each of the host devices is provided with a second electronic contact corresponding to the first electronic contact, and when the host device is connected with the connecting piece, the first electronic contact is electrically connected with the second electronic contact.

9. The eyeglasses frame according to claim 8, wherein the connecting piece is provided with a first magnetic attraction element, and the host device is provided with a second magnetic attraction element corresponding to the first magnetic attraction element; and a mutual magnetic attraction between the first magnetic attraction element and the second magnetic attraction element enables the connecting piece to be detachably connected to the host device.

10. The eyeglasses frame according to claim 8, wherein the host device is defined with a positioning hole, and the connecting piece is detachably snapped into the positioning hole; the first electronic contact is disposed on an outer surface of the connecting piece, and the second electronic contact is disposed on an inner surface of the positioning hole.

11. The eyeglasses frame according to claim 10, wherein the host device is provided with at least one positioning part on the inner surface of the positioning hole, and the outer surface of the connecting piece is provided with a positioning groove corresponding to at least one positioning part; or, the host device is provided with at least one positioning groove on the inner surface of the positioning hole, and the outer surface of the connecting piece is provided with a positioning part corresponding to the at least one positioning groove; and
when the host device is connected to the connecting piece, the positioning part is snapped into the positioning groove.

12. The eyeglasses frame according to claim 10, wherein the outer surface of the connecting piece is provided with a first magnetic attraction element, and the inner surface of the positioning hole is provided with a second magnetic attraction element; after the connecting piece is snapped into the positioning hole, the first magnetic attraction element and the second magnetic attraction element are magnetically attracted to each other.

13. The eyeglasses frame according to claim 10, wherein the connecting piece is provided with a snapping block, and the host device is provided with a snapping hole corresponding to the snapping block; the first electronic contact is disposed on the snapping block, the second electronic contact is disposed on an inner surface of the snapping hole, the snapping block is snapped into the snapping hole to connect the host device to the connecting piece, and the first electronic contact is electrically connected to the second electronic contact.

14. The eyeglasses frame according to claim 10, wherein the connecting piece is provided with a snapping hole, and the host device is provided with a snapping block corresponding to the snapping hole; the first electronic contact is disposed on an inner surface of the snapping hole, the second electronic contact is disposed on the snapping block, the snapping block is snapped into the snapping hole to connect the host device to the connecting piece, and the first electronic contact is electrically connected to the second electronic contact.

15. The eyeglasses frame according to claim 13 or 14, wherein the connecting piece is provided with a first magnetic attraction element, and the host device is provided with a second magnetic attraction element corresponding to the first magnetic attraction element; after the snapping block is snapped into the snapping hole, the first magnetic attraction element and the second magnetic attraction element are magnetically attracted to each other.

16. The eyeglasses frame according to claim 10, wherein the connecting piece and the host device are connected through a cooperation of a slide rail and a guide slide rail; one of the slide rail and the guide slide rail is disposed on the connecting piece, and the other of the slide rail and the guide slide rail is disposed on the host device; and after the slide rail and the guide slide rail are connected in place, the first electronic contact is electrically connected to the second electronic contact.

17. The eyeglasses frame according to claim 10, comprising: a chip, electrically connected with the conducting wire, and having an encryption function.

18. The eyeglasses frame according to claim 17, wherein the chip is configured to match communication and power supply between the host devices on the two eyeglass feet.

19. Smart eyeglasses, comprising: the eyeglasses frame according to any one of claims 7-18 and at least one host device; wherein the eyeglasses frame comprises the frame body and at least one connecting piece, the frame body comprises the two eyeglass feet, and at least one of the two eyeglass feet is provided with the connecting piece; and the host device is detachably connected to the connecting piece.

20. The smart eyeglasses according to claim 19, wherein the host device comprises an augmented reality (AR) eyeglasses host, a virtual reality (VR) eyeglasses host, a headphone, a flashlight, a speaker, or a camera.
